# EUROPÄISCHE PATENTSCHRIFT

(11) **EP 0 704 452 B1**
(45) Veröffentlichungstag und Bekanntmachung des Hinweises auf die Patenterteilung: **08.12.1999**
(21) Anmeldenummer: 95114937.6
(22) Anmeldetag: 22.09.1995
(51) Int. Cl.: C07F 9/6568

(54) **5-H-Phenyl(di-3,13-sulfonato)-dibenzophosphol und ein Verfahren zu seiner Herstellung**
5-H-phenyl (di-3,13-sulfonato)-dibenzophosphol and a process for its preparation
5-H-phényl (di-3,13-sulfonato)-dibenzophosphole et un procédé pour sa préparation

(30) Priorität: 30.09.1994 DE 4435171
(43) Veröffentlichungstag der Anmeldung: 03.04.1996
(73) Patentinhaber: Celanese GmbH, 60439 Frankfurt (DE)
(72) Erfinder: Albanese, Guido, D-80993 München (DE); Manetsberger, Rainer, Dr., D-82407 Wielenbach (DE); Herrmann, Wolfgang A., Prof. Dr., D-85354 Freising (DE); Schmid, Rochus, D-81673 München (DE)

(56) Entgegenhaltungen:
- EP-A- 0 575 785
- ANGEW. CHEM., INT. ED. ENGL. (ACIEAY,05700833);95; VOL.34 (7); PP.811-13, UNIV. MUENCHEN;ANORGANISH-CHEMISCHES INST. TECHNISCHEN; GARCHING; D-85747; GERMANY (DE), HERRMANN W A ET AL 'Water-soluble metal complexes and catalysts. 8. New process for the sulfonation of phosphine ligands for catalysts'

## Beschreibung

Die Erfindung betrifft die chemische Verbindung 5-H-Phenyl(3,13-disulfonato)dibenzophosphol und ein Verfahren zu ihrer Herstellung.

Komplexverbindungen, die als Zentralatom ein Metall der 8. Gruppe des Periodensystems der Elemente und als Liganden P(III)-Verbindungen, z.B. Phosphine, Phosphite oder Phosphole und daneben gegebenenfalls noch weitere, zur Komplexbildung befähigte Gruppen enthalten, haben in jüngster Zeit zunehmend als Katalysatoren Bedeutung gewonnen. So erfolgt die technisch in großem Umfang ausgeübte Reaktion von Olefinen mit Synthesegas zu Aldehyden (Hydroformylierung) in Gegenwart von Katalysatorsystemen, die aus Kobalt und insbesondere Rhodium und Triphenylphosphin bestehen. Auch zur Umsetzung von Methanol mit Synthesegas zu höheren Alkoholen, insbesondere Ethanol und Propanol (Homologisierung) haben sich Katalysatoren auf Basis von Phosphin enthaltenden Komplexverbindungen bewährt. Zumeist liegen in den genannten Fällen die Liganden im Überschuß vor, so daß das Katalysatorsystem aus Komplexverbindung und freiem Ligand besteht. Entsprechend der Löslichkeit der Katalysatoren in organischen Medien erfolgen die Reaktionen in homogener Phase.

Statt in homogener Phase, kann man diese Umsetzungen, wie auch andere katalytische Reaktionen, in heterogenen Reaktionssystemen durchführen. Diese eigenständige Entwicklung beschränkt sich nicht auf Komplexverbindungen von Metallen der Gruppe VIII A, sondern schließt auch Komplexverbindungen der Gruppen VII A und I B des Periodensystems (IUPAC-Version) als Katalysatoren ein. Der Einsatz in Wasser gelöster Katalysatoren hat den Vorteil, sie einfach und schonend von dem in Wasser nicht löslichen Reaktionsprodukt abtrennen zu können. Nach diesem Prinzip arbeitet z.B. das in der DE-C-27 00 904 beschriebene Verfahren zur Anlagerung von Cyanwasserstoff an eine ungesättigte organische Verbindung mit mindestens einer ethylenischen Doppelbindung. Als Katalysatoren sind für diese Reaktion Nickel/TPPTS (TPPTS steht für Tris(m-sulfonatophenyl)phosphin), Palladium/TPPTS oder Eisen/TPPTS geeignet. Für die Herstellung von Aldehyden durch Reaktion von Olefinen mit Kohlenmonoxid und Wasserstoff setzt man nach dem Prozeß der DE-C-26 27 354 Rhodium in metallischer Form oder in Form einer seiner Verbindungen zusammen mit einem wasserlöslichen Phosphin, z.B. TPPTS, als Katalysator ein. Weitere Katalysatoren der genannten Art und ihre Anwendung bei verschiedenen Reaktionen wie Hydrierungen, der Allen-Alkin-Kupplung und der Amin-Addition an Doppelbindungen, sind z.B. Gegenstand der EP-A-372 313.

Die Zweiphasen-Verfahren mit wäßriger Katalysatorlösung haben sich in technischem Maßstab sehr gut bewährt. Dennoch bemüht man sich, die bekannten Prozesse weiter zu vervollkommnen und das Reaktionsprinzip auf andere Umsetzungen zu übertragen. Ein Weg, diese Ziele zu erreichen, ist die Entwicklung neuer Katalysatoren, insbesondere die Modifizierung der Komplexliganden. So führt nach T. Hayashi et al, J. Mol. Catal. 6 (1970), 1 ff bei der mit Rhodium oder Kobalt als Katalysator in homogener Phase durchgeführten Hydroformylierung der Ersatz von Diphenylphosphin durch 5-H-Phenyldibenzophosphol zu einer beträchtlichen Erhöhung der Reaktionsgeschwindigkeit. Die Übertragung dieser Arbeitsweise auf das heterogene Reaktionssystem scheitert daran, daß es nicht gelingt, das Phenyldibenzophosphol ohne Oxidation des Phosphors zu sulfonieren.

Die Sulfonierung Arylreste enthaltender Mono-, Di- und Polyphosphine erfolgt nach einem Verfahren, das ursprünglich für die Sulfonierung von Triphenylphosphin entwickelt wurde (J. Chem. Soc., 1958, 281, 282).

Es besteht darin, die Phosphorverbindung mit Oleum unter Erwärmen umzusetzen, das Reaktionsprodukt mit Wasser zu verdünnen und mit Natriumhydroxid zu neutralisieren. Aus dem Sulfonierungsgemisch kristallisiert das Natriumsalz des m-Sulfonatophenyl-diphenylphosphins aus. Zur Sulfonierung anderer Phosphine als des Triphenylphosphins wird diese Arbeitsweise gegebenenfalls den Ausgangsstoffen individuell angepaßt.

Das Verfahren eignet sich jedoch nicht zur Sulfonierung von 5-H-Phenyldibenzophosphol, das oxydationsempfindlich ist und durch Schwefeltrioxid zur Phosphor(V)-verbindung oxidiert wird.

Es bestand daher die Aufgabe ein Verfahren zu entwicklen, das die Sulfonierung von 5-H-Phenyldibenzophosphol ermöglicht.

Gegenstand der Erfindung ist die durch Sulfonierung von 5-H-Phenyldibenzophosphol erhaltene chemische Verbindung 5-H-Phenyl(3,13-disulfonato)dibenzophosphol und weiterhin ein Verfahren zur Herstellung von 5-H-Phenyl(3,13-disulfonato)dibenzophosphol. Es ist dadurch gekennzeichnet, daß man 5-H-Phenyldibenzophosphol bei Temperaturen von 20 bis 170°C, vorzugsweise 60 bis 150°C, mit einem wasserfreien Gemisch aus Schwefelsäure und Orthoborsäure umsetzt.

Überraschenderweise hat sich gezeigt, daß die Verwendung eines wasserfreien Gemisches aus Schwefelsäure und Orthoborsäure als Sulfonierungsmittel die Bildung von Oxidationsprodukten der oxidationsempfindlichen Ausgangsverbindung erheblich mindert oder gänzlich unterdrückt.

Entscheidendes Merkmal des erfindungsgemäßen Herstellungsverfahrens ist die Verwendung einer wasserfreien Mischung von Schwefelsäure und Orthoborsäure als Sulfonierungsmittel. Daher setzt man die Schwefelsäure zweckmäßig in wasserfreier Form ein. Überdies ist es erforderlich, Reaktionswasser, das im Sulfonierungsreagenz H₂SO₄/H₃BO₃ nach der Gleichung 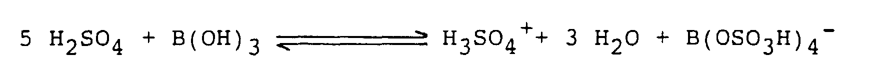 gebildet wird, durch wasserbindende Substanzen aus dem Reaktionsgemisch zu entfernen. Besonders bewährt hat sich für diesen Zweck Schwefeltrioxid, das mit Wasser Schwefelsäure, also eine reaktionseigene Verbindung, bildet. Zweckmäßig setzt man es in Form von Oleum ein. Das wasserbindende Reagenz wird dem Reaktionsgemisch in dem Maße zudosiert, wie Wasser entsteht.

Der weitere Bestandteil des Sulfonierungsgemisches, Orthoborsäure, wird in handelsüblicher Form verwendet. Eine besondere Reinigung ist nicht erforderlich. Man setzt die Säure, bezogen auf die im Phosphol enthaltenen P(III)-Atome, etwa in äquimolaren Mengen ein, so daß je mol Phosphoratom ein mol Borsäure vorliegt. Ein geringer Unterschuß schadet nicht, ein Überschuß wird jedoch bevorzugt. Besonders vorteilhaft ist es, Orthoborsäure bis zur Sättigung in der Schwefelsäure zu lösen.

Die Ausgangsverbindung für die Sulfonierung, 5-H-Phenyldibenzophosphol, ist z.B. nach der in Chem. Ber. 95 (1962), 2563 veröffentlichten Vorschrift zugänglich. Eine besondere Reinigung ist entbehrlich, es sei denn, die weitere Verwendung der sulfonierten Verbindungen, z.B. als Katalysatorbestandteil, erfordert sie.

Es ist zweckmäßig, der Schwefelsäure bereits vor Eintragen des Phosphols die Borsäure zuzusetzen und das entstehende Wasser zu binden. Die Zugabe des Phosphols zu dem Sulfonierungsreagens erfolgt anteilsweise bei 20 bis 120°C, wobei man z.B. durch Rühren für eine schnelle und gleichmäßige Verteilung der Phosphorverbindung in das Reaktionsgemisch sorgt. Es hat sich bewährt, die Phosphorverbindung in gelöster Form einzusetzen, als Lösungsmittel verwendet man bevorzugt wasserfreie Schwefelsäure. Die Sulfonierung erfolgt bei Temperaturen im Bereich von 20 bis 170°C, 60 bis 150°C werden bevorzugt. Um eine möglichst gleichmäßige Temperatur aufrechtzuerhalten empfiehlt es sich, das Reaktionsgemisch zu rühren. Die Reaktionszeit ist abhängig von der Reaktionstemperatur und beträgt 5 bis 50 Stunden.

Nachdem die Umsetzung beendet ist, wird das Reaktionsgemisch mit sauerstofffreiem Wasser verdünnt und aufgearbeitet. Nach einem bevorzugten Verfahren extrahiert man die saure, wäßrige Lösung des Sulfonierungsproduktes mit der Lösung eines wasserunlöslichen Amins in einem wasserunlöslichen organischen Lösungsmittel. Auf diesem Wege erhält man ein sulfoniertes Produkt, das weitgehend frei von der im Sulfonierungsschritt verwendeten Orthoborsäure ist.

Im einzelnen wird bei dieser Art der Aufarbeitung das Sulfonierungsgemisch mit soviel sauerstoffreiem Wasser versetzt, wie zur Verdünnung der vorhandenen Schwefelsäure auf 0,5 bis 50 Gew.-%, vorzugsweise 25 bis 35 Gew.-% nötig ist. Zu der verdünnten Lösung gibt man das in einem wasserunlöslichen organischen Lösungsmittel gelöste wasserunlösliche Amin. Die Konzentration der Amin-Lösung beträgt 1,0 bis 35 Gew.-%, vorzugsweise 10 bis 30 Gew.-% und insbesondere 13 bis 25 Gew.-% Amin, jeweils bezogen auf die Lösung.

Je Äquivalent Sulfonsäure verwendet man 0,5 bis 3,0 mol, vorzugsweise 0,5 bis 2,5 mol Amin. Der Einsatz überschüssigen Amins stellt sicher, daß nur geringe Phospholverluste eintreten. Ein höherer Aminüberschuß als vorstehend angegeben ist zwar möglich, führt jedoch nicht zur Verbesserung des Ergebnisses der Trenn- bzw. Reinigungsoperation oder der Ausbeute.

Nach intensivem Mischen bilden sich zwei Phasen. Die spezifisch schwerere, wäßrige Phase enthält die Schwefelsäure und nahezu die gesamte Orthoborsäure, die sulfatarme und von Orthoborsäure annähernd freie organische Phase das Aminsalz des sulfonierten Phosphins, gelöst in dem organischen Lösungsmittel. Die beiden Phasen werden voneinander getrennt. Die organische Phase wird gegebenenfalls z.B. mit Wasser gewaschen, um noch gelöste Borsäure zu entfernen und darauf mit der Lösung einer anorganischen Base in Wasser umgesetzt. Die Base gelangt hierbei in einer der gelösten Aminsalzmenge äquivalenten Menge zum Einsatz. Überschüssige Base ist zu vermeiden, weil sie das Endprodukt verunreinigt. Man erhält auf diese Weise unter Wiedergewinnung des wasserunlöslichen Amins die wäßrige Lösung des sulfonierten Phenyldibenzophosphols. Das Amin steht für einen erneuten Einsatz zur Verfügung.

Das beschriebene Verfahren kann sowohl diskontinuierlich als auch kontinuierlich durchgeführt werden. Die für Stofftrennungen gebräuchlichen Apparate wie Gegenstromextraktionsanlagen finden Anwendung.

Als wasserunlösliche Amine, die zur Durchführung des Verfahrens eingesetzt werden, kommen wasserunlösliche homo- und heterocyclische, aliphatische, aromatische, araliphatische und vorzugsweise offenkettige, verzweigte oder unverzweigte aliphatische Amine mit 10 bis 60, vorzugsweise 13 bis 36 Kohlenstoffatomen in Betracht. Weniger geeignet sind Amine, deren Salze mit dem sulfonierten Phenyldibenzophosphol in dem organischen Lösungsmittel nicht oder nur beschränkt löslich sind. Als Beispiele für besonders bewährte Amine seien genannt: Tri-n-octylamin, Triisooctylamin, Tri-2-ethylhexylamin und Tridodecylamin.

Die Amine werden in einem wasserunlöslichen organischen Lösungsmittel gelöst. Geeignet sind insbesondere aliphatische oder aromatische Kohlenwasserstoffe oder Kohlenwasserstoffgemische, z.B. Toluol oder Kerosin, daneben auch C₄- bis C₂₀-Alkohole und C₈- bis C₂₀-Ether.

Als Basen für die Überführung des sulfonsauren Phenyldibenzophosphols in die Wasserphase sind die Hydroxide der Alkali- und Erdalkalimetalle, insbesondere Alkalihydroxid, Ammoniak, daneben auch die Alkalicarbonate, geeignet. Durch Einengen der wäßrigen Lösung zur Trockne erhält man das entsprechende Salz des 5-H-Phenyl(3,13-disulfonato)dibenzophosphols. Aus ihm können durch Ionenaustausch die freie Säure und auch die Salze anderer Metalle hergestellt werden.

Die Aufarbeitung wird zweckmäßig im Bereich von Raumtemperatur bis etwa 40°C durchgeführt. Höhere Temperaturen ergeben keine Vorteile. Die Angaben über die Löslichkeit der Amine und der organischen Lösungsmittel im Wasser beziehen sich hierbei jeweils auf die Temperaturen, bei denen das Verfahren durchgeführt wird.

5-H-Phenyl(3,13-disulfonato)dibenzophosphol hat sich als Bestandteil von Katalysatorsystemen, z.B. solchen, die Rhodium oder Kobalt enthalten, für die Hydroformylierung olefinisch ungesättigter Verbindungen, aber auch für andere Reaktionen bewährt.

Die neue Verbindung und das Verfahren zu seiner Herstellung werden in dem nachfolgenden Beispiel beschrieben.

### Beispiel: Herstellung und Eigenschaften von 5-H-Phenyl(3,13-disulfonato)dibenzophosphol

(a) Sulfonierung von 5-H-Phenyldibenzophosphol
   Zu einer Lösung von 2.40 g (38.4 mmol) Orthoborsäure in 8 ml konzentrierter Schwefelsäure (96 %) werden 10 ml Oleum (65 Gew.-% SO₃) getropft, so daß im Gemisch eine SO₃-Konzentration von etwa 5.6 Gew.-% resultiert. Das überschüssige SO₃ wird bei 60°C im Hochvakuum innerhalb 45 min entfernt. Anschließend löst man unter Rühren im H₂SO₄/H₃BO₃-Gemisch 500 mg (1.9 mmol) 5-H-Phenyldibenzophosphol (Molverhältnis Borsäure/Phosphor = 20/1) und läßt bei 145°C 15 h reagieren. Das Reaktionsgemisch wird abgekühlt, mit 20 ml sauerstofffreiem Wasser hydrolysiert und mit 4 ml Triisooctylamin in 30 ml Toluol extrahiert. Man wäscht die organische Phase dreimal mit 20 ml Wasser, um die Borsäure vollständig zu entfernen und reextrahiert darauf mit 7.5 m NaOH bis zur Einstellung eines pH-Wertes von 11.8. Anschließend wird die wäßrige Phase mit 3 m H₂SO₄ neutralisiert, im Vakuum zur Trockne eingedampft und der zurückbleibende Feststoff mit 20 ml Methanol extrahiert. Durch Entfernen des Lösungsmittels erhält man aus dem Extrakt das Produkt als weißen glasigen Feststoff. Die Ausbeute beträgt 852 mg, entsprechend 89 % der Theorie.
(b) Charakterisierung von 5-H-Phenyl(3,13-disulfonato)dibenzophosphol als Na+-Salz: 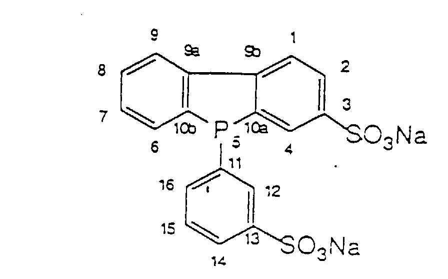 ³¹P-{¹H}-NMR (D₂O): = 17.42; ¹H-¹H-COSY-NMR (D₂O): = 6.90 (dt, ³J_{HH} = 7.3 Hz, ⁴J_{HH} = 1.9 Hz, 2 H, H8, H9), 7.01 (tt, ³J_{HH} = 7.7 Hz, ⁴J_{HP} = 12.0 Hz, ⁴J_{HH} = 1.2 Hz, 1H, H16), 7.06 (td, ³J_{HH} = 7.7 Hz, ⁴J_{HP} = 3.2 Hz, 1H, H15), 7.20 (dd, ³J_{HH} = 8.0 Hz, ⁴J_{HP} = 4.4 Hz, 1H, H1), 7.32 (dt, ³J_{HH} = 7.3 Hz, ⁴J_{HH} = 1.9 Hz, 2 H, H6, H7), 7.43 (dt, ³J_{HP} = 14.0 Hz, ⁴J_{HH} = 1.2 Hz, 1 H, H12), 7.81 (dd, ³J_{HH} = 8.0 Hz, ⁴J_{HH} = 2.0 Hz, 1 H, H2), 8.41 (dd, ³J_{HP} = 14.0 Hz, ⁴J_{HH} = 2.0 Hz, 1 H, H4), 7.55 (ddd, ³J_{HH} = 7.7 Hz, ⁴J_{HH16} = 1.8 Hz, ⁴J_{HH15} = 1.3 Hz, 1H, H14).

## Patentansprüche

1. Die chemische Verbindung 5-H-phenyl(3,13-disulfonato)dibenzophosphol.

2. Verfahren zur Herstellung von 5-H-phenyl(3,13-disulfonato)dibenzophosphol, dadurch gekennzeichnet, daß man 5-H-phenyldibenzophosphol bei Temperaturen von 20 bis 170°C, mit einem wasserfreien Gemisch aus Schwefelsäure und Orthoborsäure umsetzt.

3. Verfahren nach Anspruch 2, dadurch gekennzeichnet, daß die Umsetzung bei 60 bis 150°C erfolgt.

4. Verfahren nach Anspruch 2 oder 3, dadurch gekennzeichnet, daß im Gemisch aus Schwefelsäure und Orthoborsäure enthaltenes Wasser mit Hilfe wasserbindender Mittel entfernt wird.

5. Verfahren nach einem oder mehreren der Ansprüche 2 bis 4, dadurch gekennzeichnet, daß als wasserbindendes Mittel Schwefeltrioxid verwendet wird.

6. Verfahren nach Anspruch 5, dadurch gekennzeichnet, daß das Schwefeltrioxid in Form von Oleum eingesetzt wird.

7. Verfahren nach einem oder mehreren der Ansprüche 2 bis 6, dadurch gekennzeichnet, daß man 5-H-Phenyldibenzophosphol als Lösung in wasserfreier Schwefelsäure in das wasserfreie Gemisch aus Schwefelsäure und Orthoborsäure einträgt.

8. Verfahren nach einem oder mehreren der Ansprüche 2 bis 7, dadurch gekennzeichnet, daß Orthoborsäure, bezogen auf 5-H-Phenyldibenzophosphol in mindestens äquimolarer Menge eingesetzt wird.

9. Verfahren nach einem oder mehreren der Ansprüche 2 bis 8, dadurch gekennzeichnet, daß das wasserfreie Gemisch aus Schwefelsäure und Orthoborsäure mit Orthoborsäure gesättigt ist.

10. Verfahren nach einem oder mehreren der Ansprüche 2 bis 9, dadurch gekennzeichnet, daß nach beendeter Sulfonierung das Reaktionsgemisch mit so viel Wasser versetzt wird, wie zur Verdünnung der vorhandenen Schwefelsäure auf 0,5 bis 50 Gew.-% nötig ist und die erhaltene wäßrige Lösung mit der Lösung eines wasserunlöslichen Amins in einem wasserunlöslichen organischen Lösungsmittel extrahiert wird, wobei je chemischem Äquivalent Sulfonsäure 0,5 bis 3 mol des Amins angewandt werden, die organische Phase abgetrennt und mit der wäßrigen Lösung einer Base in innige Berührung gebracht, darauf die wäßrige Phase abgetrennt und aus dieser das sulfonierte Arylphosphin isoliert wird.

## Claims

1. The chemical compound 5H-phenyl-3,13-disulfonatodibenzophosphole.

2. A process for the preparation of the 5H-phenyl-3,13-disulfonatodibenzophosphole, which comprises reacting 5H-phenyldibenzophosphole at temperatures from 20 to 170°C with an anhydrous mixture of sulfuric acid and orthoboric acid.

3. The process as claimed in claim 2, wherein the reaction is carried out at from 60 to 150°C.

4. The process as claimed in claim 2 or 3, wherein water present in the mixture of sulfuric acid and orthoboric acid is removed with the aid of water-binding agents.

5. The process as claimed in one or more of claims 2 to 4, wherein the water-binding agent used is sulfur trioxide.

6. The process as claimed in claim 5, wherein the sulfur trioxide is employed in the form of oleum.

7. A process as claimed in one or more of claims 2 to 6, wherein 5H-phenyldibenzophosphole as a solution in anhydrous sulfuric acid is introduced into the anhydrous mixture of sulfuric acid and orthoboric acid.

8. The process as claimed in one or more of claims 2 to 7, wherein orthoboric acid is employed in an at least equimolar amount based on 5H-phenyldibenzophosphole.

9. The process as claimed in one or more of claims 2 to 8, wherein the anhydrous mixture of sulfuric acid and orthoboric acid is saturated with orthoboric acid.

10. The process as claimed in one or more of claims 2 to 9, wherein after sulfonation has ended the reaction mixture is admixed with an amount of water required to dilute the sulfuric acid present to from 0.5 to 50% by weight and the resulting aqueous solution is extracted with a solution of a water-insoluble amine in a water-insoluble organic solvent, from 0.5 to 3 mol of the amine being employed per chemical equivalent to sulfonic acid, the organic phase is separated off and brought into intimate contact with the aqueous solution of a base, then the aqueous phase is separated off and the sulfonated arylphosphine is isolated therefrom.

## Revendications

1. Composé chimique de 5-H-phényl(3,13-disulfonato)dibenzophosphol.

2. Procédé pour la préparation de 5-H-phényl(3,13-disulfonato)dibenzophosphol, caractérisé en ce que l'on fait réagir du 5-H-phényldibenzophosphol à des températures de 20 à 170°C avec un mélange anhydre d'acide sulfurique et d'acide orthoborique.

3. Procédé selon la revendication 2, caractérisé en ce que la réaction est réalisée à de 60 à 150°C.

4. Procédé selon la revendication 2 ou 3, caractérisé en ce que l'on élimine dans le mélange d'acide sulfurique et d'acide borique l'eau contenue à l'aide d'un agent liant l'eau.

5. Procédé selon une ou plusieurs quelconques des revendications 2 à 4, caractérisé en ce que l'on utilise comme agent liant l'eau du trioxyde de soufre.

6. Procédé selon la revendication 5, caractérisé en ce que l'on utilise le trioxyde de soufre dans la forme d'oléum.

7. Procédé selon l'une ou plusieurs quelconques des revendications 2 à 6, caractérisé en ce que l'on dépose le 5-H-phényldibenzophosphol comme solution dans de l'acide sulfurique anhydre dans le mélange anhydre d'acide sulfurique et d'acide orthoborique.

8. Procédé selon l'une ou plusieurs quelconques des revendications 2 à 7, caractérisé en ce que l'on utilise l'acide orthoborique, rapporté au 5-H-phényldibenzophosphol, au moins en quantité équimolaire.

9. Procédé selon l'une ou plusieurs quelconques des revendications 2 à 8, caractérisé en ce que le mélange anhydre d'acide sulfurique et d'acide orthoborique est saturé en acide orthoborique.

10. Procédé selon l'une ou plusieurs quelconques des revendications 2 à 9, caractérisé en ce que l'on ajoute après la sulfonation achevée du mélange réactionnel autant d'eau nécessaire jusqu'à une dilution de l'acide sulfurique présent à de 0,5 à 50 % en poids et on extrait la solution aqueuse obtenue avec la solution d'une amine insoluble dans l'eau dans un solvant organique insoluble dans l'eau, de 0,5 à 3 mol de l'amine étant appliquées pour chaque équivalent chimique d'acide sulfonique, on sépare la phase organique et on la met en agitation intime avec la solution aqueuse d'une base, on sépare ensuite la phase aqueuse et on isole l'arylphosphine sulfonée de celle-ci.
